# EUROPEAN PATENT APPLICATION

(11) **EP 1 044 828 A1**
(43) Date of publication of application: **18.10.2000**
(21) Application number: 00303006.1
(22) Date of filing: 10.04.2000
(51) Int. Cl.: B60C 23/00

(54) **Tire pressure management system**

(30) Priority: 13.04.1999 US 129047; 14.03.2000 US 525449
(71) Applicant: DANA CORPORATION, Toledo, OH 43606 (US)
(72) Inventor: Schultz, Gary Richard, Kalamazoo, Michigan 49009 (US)
(74) Representative: Cheyne, John Robert Alexander Mackenzie

(57) **Abstract**

A tire pressure management system (10) for a vehicle (12) is provided. The system includes an air source (32) and a pressure control valve (82) disposed between the air source (32) and the tires (28) of the vehicle (12). The system further includes pressure sensing circuits (38) that transmit radio-frequency signals indicative of pressure within the tires (28) of the vehicle and one or more load sensors (44) that transmit load indicative signals indicative of the load on the vehicle (12) or a portion of the vehicle (12). Finally, the system includes an electronic control unit (42) that controls the pressure control valve (82) responsive to the radio-frequency signals and/or the load indicative signals to thereby control pressure within the vehicle tires (28).

## Description

### BACKGROUND OF THE INVENTION

### 1. Field of the Invention

The present invention relates to tire pressure management systems for vehicles and, in particular, to: (i) an improved tire pressure management system using wireless transmission of measured tire pressure values; and (ii) an improved tire pressure management system wherein pressure in the vehicle tires is controlled responsive to vehicle loading and/or desired tire deflection levels.

### 2. Disclosure of Related Art

Conventional tire pressure management systems have typically consisted of central tire inflation systems (CTI systems), also known as on-board inflation systems and traction systems. These tire pressure management systems are well known in the prior art, as may be seen by reference to the following U.S. Patent Nos.: 5,516,379; 5,313,995; 5,273,064; 5,253,687; 5,180,456; 5,179,981; 5,174,839; 5,121,774; 4,924,926; 4,922,946; 4,917,163; 4,893,664; 4,883,106; 4,883,105; 4,825,925; 4,782,879; 4,754,792; 4,724,879; 4,678,017; 4,640,331; and 4,619,303.

Generally, these prior art tire pressure management systems have employed a pneumatically controlled wheel valve that is affixed to each vehicle wheel assembly for controlling tire pressure in response to pressure signals from an air control circuit. The air control circuit is connected to each wheel valve via a rotary seal assembly associated with each wheel valve. Tire pressure is monitored by means of a sensor that is positioned in a conduit assembly in the air control circuit. When the wheel valve and certain control valves are opened, the pressure in the conduit assembly equalizes to tire pressure which can then be sensed by the sensor. An electronic control unit reads electrical pressure signals generated by the sensor and appropriately controls the air control circuit in response thereto for inflating or deflating a selected tire.

Although prior art tire pressure management systems have functioned well for their intended purpose, the systems suffer from several deficiencies. First, the use of a single pressure sensor in the conduit assembly of the air control circuit has limited the ability to ascertain individual tire pressures for the tires of the vehicle. Further, the measured pressures are affected by variables inherent in the air control circuit such as air line diameter and length, and reservoir volumes. As a result, conventional tire pressure management systems may be unable to maintain and control tire pressures at desired levels. Second, conventional tire pressure management systems fail to account for variations in vehicle load--resulting from an increase or decrease in load on the vehicle as a whole or from uneven load distribution within the vehicle--or vehicle speed. As a result, tire pressures in conventional systems are generally maintained at preset pressures despite load and speed variations, thereby reducing tire performance and the life of the tire.

There is thus a need for a tire pressure management system that will minimize or eliminate one or more of the above-mentioned deficiencies.

The present invention seeks to provide a tire pressure management system for vehicles and a method for managing tire pressure in vehicles.

### SUMMARY OF THE INVENTION

In accordance with a first embodiment of the present invention, a tire pressure management system includes an air source and a first pressure control valve disposed between the air source and a tire of the vehicle. The inventive system also includes a pressure sensing circuit in fluid communication with the interior of the tire. The pressure sensing circuit includes a transmitter that transmits a radio-frequency parameter signal indicative of a value of a parameter associated with the tire. The parameter may comprise, for example, pressure within the tire. Finally, the inventive system includes an electronic control unit configured to control the first pressure control valve responsive to the parameter signal. In operation, the transmitter of the pressure sensing circuit generates the radio-frequency parameter signal which may be received by a receiver coupled to the electronic control unit. The control unit compares the pressure of the tire as indicated by the parameter signal to a predetermined target pressure and adjusts the pressure in the tire accordingly.

A tire pressure management system in accordance with a first embodiment of the present invention represents a significant improvement as compared to conventional tire pressure management systems. The inventive system allows direct sensing of individual tire pressure through the use of wireless pressure sensing technologies thereby simplifying pressure monitoring and control. Further, the measured pressures are unaffected by variables inherent in the air control circuit such as air line diameter and length, and reservoir volumes. As a result, the inventive system provides more accurate monitoring and control of tire pressure.

In accordance with a second embodiment of the present invention, a tire pressure management system again includes an air source and a pressure control valve disposed between the air source and a tire of the vehicle. The system further includes a load sensor that generates a load indicative signal indicative of a load bearing on at least a portion of the vehicle. Finally, the system includes an electronic control unit configured to control the pressure control valve responsive to the load indicative signal. In a preferred embodiment, the electronic control unit uses the load indicative signal to access a deflection table for the tire that is stored in a memory. The electronic control unit is able to obtain an appropriate pressure value from the deflection table to maintain a preset tire deflection level.

A tire pressure management system in accordance with a second embodiment of the present invention also represents a significant improvement as compared to conventional tire pressure management systems. The inventive system enables optimization of vehicle tire pressure to account for load variations in the vehicle resulting from an increase or decrease in vehicle load as a whole or uneven distribution of load within the vehicle. As a result, the inventive system improves tire performance and tire life. These and other features and objects of this invention will become apparent to one skilled in the art from the following detailed description and the accompanying drawings illustrating features of this invention by way of example.

### BRIEF DESCRIPTION OF THE DRAWINGS

Figure 1 is a diagrammatic view illustrating a tire pressure management system for a vehicle in accordance with the present invention.
Figure 2 is a sectional view of a conventional vehicle wheel assembly.
Figure 3 is a block diagram illustrating several of the components of the system of Figure 1.
Figure 4 is a graph illustrating variations in pressure responsive to variation in load for a plurality of tire deflection levels.

### DETAILED DESCRIPTION OF THE PREFERRED EMBODIMENT

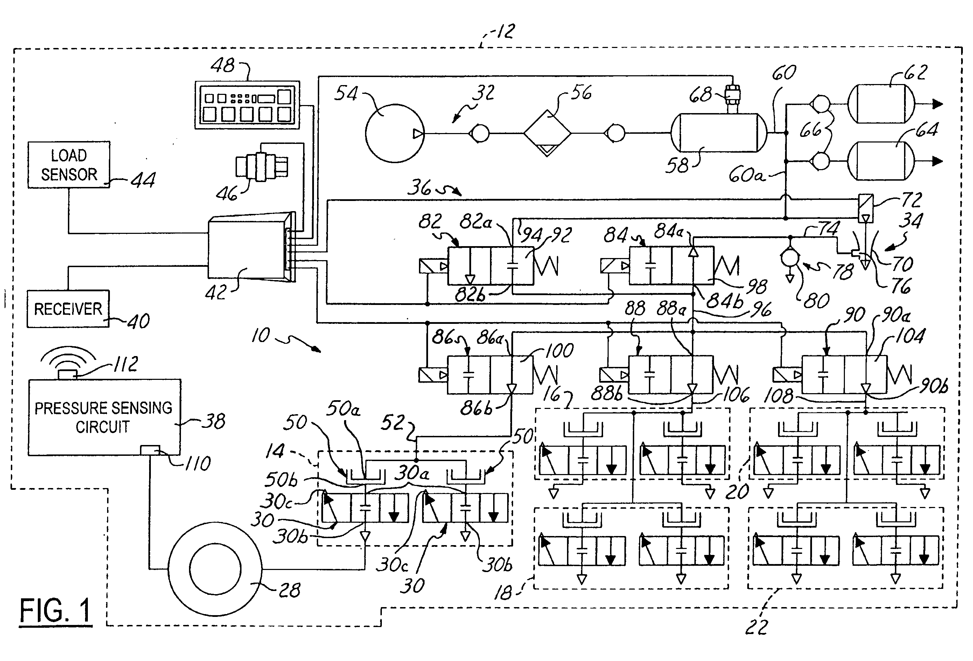

Referring now to the drawings wherein like reference numerals are used to identify identical components in the various views, Figure 1 illustrates a tire pressure management system 10 for a vehicle 12 (shown diagrammatically by a dotted line) in accordance with the present invention. In the illustrated embodiment, vehicle 12 comprises a tractor-trailer. It should be understood, however, that the inventive system may be used in connection with a wide variety of vehicles including automobiles.

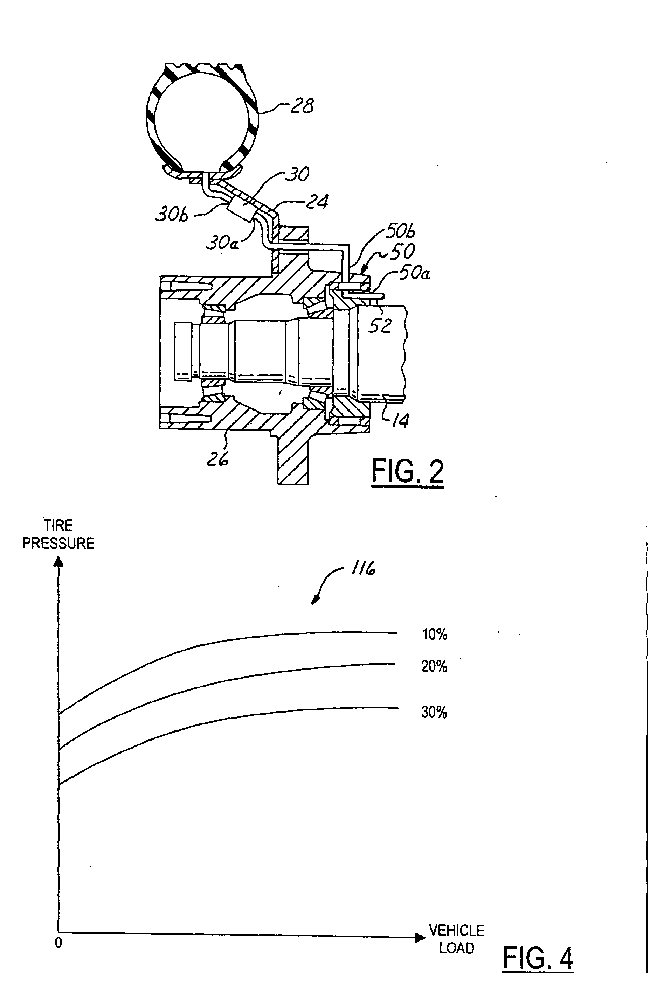

Vehicle 12 may include a plurality of axles including a steer axle represented by dotted line 14, a tandem axle assembly having drive axles represented by dotted lines 16, 18 and another tandem axle assembly having trailer axles represented by dotted lines 20, 22. Referring to Figure 2, each axle of vehicle, such as drive axle 14, may include wheels 24 affixed to wheel hubs 26 disposed at each outboard end of the axle and rotationally supported on the axle. Each wheel 24 of vehicle may include one or more inflatable tires 28 mounted thereon.

Referring again to Figure 1, a system 10 in accordance with the present invention will be described. System 10 is provided to monitor and control pressure within each tire 28 of vehicle 12. System 10 may include wheel valve assemblies 30, an air source 32, a vacuum source 34, and an air control circuit 36. In accordance with the present invention, system 10 may further include a plurality of pressure sensing circuits 38, one or more receivers 40, one or more electronic control units 42, one or more load sensors 44, a speed sensor 46, and an operator control device 48.

Wheel valve assemblies 30 are provided to control the flow of pressurized air into and out of tires 28. A valve assembly 30 is mounted to each end of each axle and is connected to the remainder of system 10 through a rotary seal connection 50. Wheel valve assembly 30 is conventional in the art and may comprise the wheel valve assembly described and illustrated in any of U.S. Patent No 5,253,687 or U.S. Application Serial No. 09/257,439 entitled "Fluid Flow Valve With Variable Flow Rate".

Rotary seal assembly 50 is also conventional in the art and may comprise the rotary seal assembly described and illustrated in U.S. Patent No. 5,174,839.

Referring again to Figure 2, wheel valve assembly 30 may include an inlet port 30a coupled to a rotatable port 50b of rotary seal assembly 50, an outlet port 30b in fluid communication with the interior of tire 28, and an exhaust port 30c (best shown in Figure 1). Rotary seal assembly 50 may further include a non-rotatable port 50a connected to a conduit 52 of air control circuit 36. Valve assembly 30 may assume a closed position (illustrated in Figure 1) when the air pressure at inlet port 30a is substantially atmospheric, an open position connecting inlet port 30a and outlet port 30b when the air pressure at inlet port 30a is a positive pressure, and an exhaust position connecting outlet port 30b and exhaust port 30c when the air pressure at inlet port 30a is a negative pressure.

Air source 32 provides positive pressurized air to system 10 and tires 28. Air source 32 is conventional in the art and may comprise a vehicle air brake pressure source including a pump 54, an air dryer 56, and a first air tank 58 connected via a conduit 60 to the brake system air tanks 62, 64 and to the air control circuit 36 via a branch conduit 60a. Check valves 66 prevent sudden loss of air pressure in brake tanks 62, 64 in the event of upstream pressure loss. A Pressure sensor 68 is used to monitor pressure within tank 58 and provides a pressure indicative signal to electronic control unit 42.

Vacuum source 34 produces a negative pressure in system 10 to decrease air pressure within tires 28 of vehicle 12. Vacuum source 34 is also conventional in the art and may include a vacuum generator 70 controlled through a solenoid valve 72. A low pressure zone is produced by passing air through a venturi like portion of vacuum generator 70. Upon energization of solenoid valve 72 to an open position via a control signal from electronic control unit 42, a vacuum or negative air pressure, relative to atmospheric pressure, is produced in a conduit 74 that has a small orifice 76 disposed proximate the low pressure zone produced by generator 70. Conduit 74 is also connected to a one-way vent valve 78 to effect rapid venting of positive air pressure in conduit 74. Vent valve 78 includes a valving member 80 that is drawn to a closed position in response to negative air pressure in conduit 74 and is moved to an open position in response to positive pressure air in conduit 74.

Air control circuit 36 is provided to direct the flow of pressurized air within system 10 for use in controlling pressure within tires 28 of vehicle 12. Control circuit 36 may include a pair of pressure control valves 82, 84 and a plurality of axle distribution valves 86, 88, 90. In the illustrated embodiment, a single air control circuit 36 is used to control pressure in all of the tires 28 of vehicle 12. It should be understood, however, that control circuit 36--along with other portions of system 10--may be replicated so that, for example, one control circuit 36 is used to control tire pressures in the tractor portion of vehicle 12 and another control circuit 36 is used to control tire pressure in the trailer portion of vehicle 12.

Pressure control valve 82 directs positive pressurized air from air source 32 to tires 28 of vehicle 12. Valve 82 may comprise a conventional two position-two way, solenoid controlled and pilot air operated valve. Valve 82 includes a valving member 92 that is spring biased to a closed position as illustrated in Figure 1. The valving member 84 is moved to an open position in response to energization of its solenoid via control signals from electronic control unit 42. Valve 82 includes a first port 82a coupled to a conduit 94 leading to air source 32. Valve 82 includes a second port 82b coupled to another conduit 96 leading to axle distribution valves 86, 88, 90.

Pressure control valve 84 vents control circuit 36. Valve 84 is conventional in the art and may also comprise a two position-two way, solenoid controlled and pilot air operated valve. Valve 84 includes a valving member 98 that is spring biased to an open position as illustrated in Figure 1. The valving member 98 is moved to a closed position in response to energization of its solenoid via control signals from electronic control unit 42. Valve 84 includes a first port 84a coupled to conduit 74 leading to orifice 76. Valve 84 includes a second port 84b coupled to conduit 96 leading to axle distribution valves 86, 88, 90.

Axle distribution valves 86, 88, 90 are provided to limit the supply of positive pressurized air to, or the release of air from, the tires 28 of one or more axles 14, 16, 18, 20, 22 of vehicle 12. Valves 86, 88, 90 are conventional in the art and may comprise two position-two way, solenoid controlled and pilot air operated valves. Valves 86, 88, 90 direct the flow of air to and from the tires 28 of axles 14, 16 and 18, and 20 and 22, respectively. Each of valves 86, 88, 90 includes a valving member 100, 102, 104, respectively, that is spring-biased to an open position as illustrated in Figure 1 and which is moved to a closed position in response to energization of the associated solenoid via electrical signals from electronic control unit 42. Each of valves 86, 88, 90 further includes a first port 86a, 88a, 90a, respectively, coupled to conduit 96. Finally, each of valves 86, 88, 90 includes a second port 86b, 88b, 90b, respectively, leading to a corresponding conduit 52, 106, 108 for each axle or tandem axle of vehicle 12. Although axle distribution valves 86, 88, 90 are used in the illustrated embodiment, it should be understood that individual tire distribution valves could be used in conjunction with axle distribution valves 86, 88, 90 or as an alternative to axle distribution valves 86, 88, 90 to further control the flow of air to and from individual tires 28 of vehicle 12. Further, although only three axle distribution valves 86, 88, 90 are illustrated in the disclosed embodiment, it should be understood that the number of axle distribution valves may be varied depending upon the number of axles of vehicle 12 and to allow for greater individual control of the tires 28 of vehicle 12.

Pressure sensing circuits 38 are provided to monitor the tire pressure in each tire 28 of vehicle 12. A variety of pressure sensing circuits 38 are known in the art and circuits 38 may comprise the pressure sensing circuits described and illustrated in U.S. Patent Nos. 5,600,301 and 5,838,229 assigned to Schrader-Bridgeport, International, Inc. Each circuit 38 may include a pressure transducer 110 in fluid communication with the interior of a vehicle tire 28. Each circuit 38 also includes a radio-frequency transmitter 112 that transmits a parameter signal indicative of a measured parameter associated with a corresponding tire 28 of vehicle 12. The parameter may comprise pressure itself or another value, such as tire temperature, that may be indicative of tire pressure. The parameter signal is preferably encoded with a tire identification code to uniquely identify the tire 28 to which the signal corresponds. The encoding of radio-frequency signals with unique identification codes is well known in the art and may be implemented in a variety of ways known in the art such as by frequency shift key modulation. Circuit 38 may be configured so that transmitter 112 transmits parameter signals at a periodic rate or when a predetermined event occurs, such as a specific change in pressure level.

Receivers 40 are provided to receive the radio-frequency signals generated by transmitters 112 of pressure sensing circuits 38 and to provide electronic signals to electronic control unit 42 corresponding to the received radio-frequency signals. Receivers 40 are conventional in the art and may form part of control unit 42. The number of receivers 40 used in system 10 may depend upon the number of vehicle tires 28, the location of pressure sensing circuits 38 and other factors. In the case of a tractor-trailer, multiple receivers 40 may be needed to maintain signal integrity because of the relatively large distance between the tires 28 of the tractor-trailer and the relatively large number of tires 28. Where multiple receivers 40 are used, each receiver 40 may be coupled to electronic control unit 42. Alternatively, several secondary receivers may be coupled through a hardwire, radio-frequency, or power lead communication connection to a primary receiver that is electrically connected to the electronic control unit 42. The use of "wireless" connections between the primary and secondary receivers by, for example, the inclusion of radio-frequency transmitters in the secondary receivers, enables different trailers to be secured to the tractor of vehicle 12 without requiring the decoupling and coupling of a plurality of electrical connections.

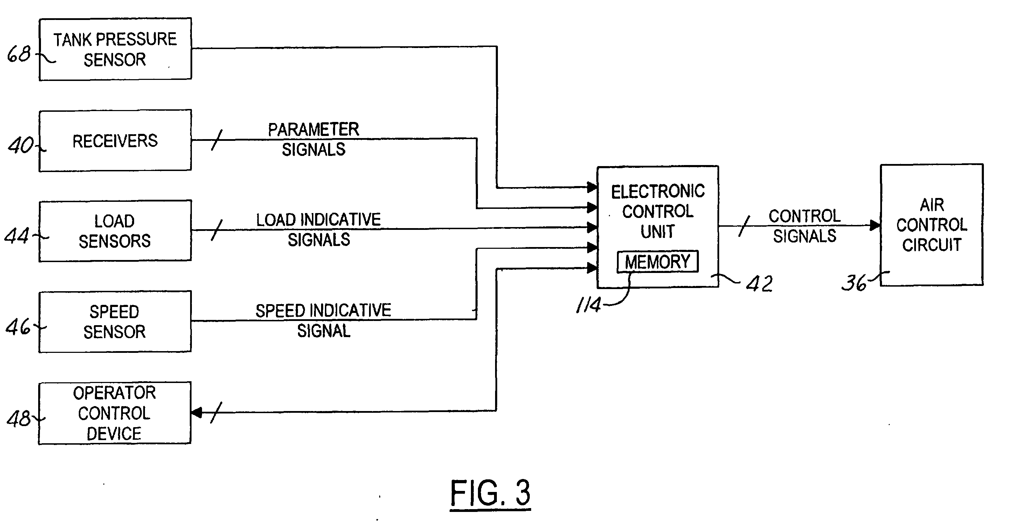

Referring now to Figure 3, electronic control unit 42 is provided to control air control circuit 36 Control unit 42 may comprise a microprocessor operating under the control of a set of programming instructions (i.e., software). Electronic control unit may include a memory 114 in which the programming instructions are stored. Memory 114 may also contain identification codes for each tire 28 of vehicle 12 in order to uniquely identify the tire 28 to which each parameter signal corresponds. Finally, memory 114 may be used to record tire pressure values or user inputs over a period of time to assist in evaluating tire pressure management.

Control unit 42 may receive input signals from receivers 40, one or more load sensors 44, speed sensor 46, and operator control device 48. Control unit 42 outputs a plurality of control signals used to control valves 82, 84, 86, 88, 90 of air control circuit 36 and solenoid valve 72 of vacuum source 34. Control unit 42 may also generate a plurality of output signals to a display device which may comprise a part of operator control device 48 or a freestanding device. The latter signals may be used to display pressure readings and/or deflection levels for each vehicle tire 28, the load on vehicle 12 or a portion of it, and the speed of vehicle 12. The signals may also be used to communicate warnings to the operator of vehicle 12 in the event that pressure cannot be maintained in one of the vehicle tires 28, the pressure exceeds or falls below predetermined maximum and minimum tire pressure values, or the pressure differs from a target pressure value by more than a predetermined amount.

In the illustrated embodiment, a single electronic control unit 42 is provided that receives the signals generated by all of the pressure sensing circuits 38 and generates control signals for all of the valves 82, 84, 86, 88, 90 of air control circuit 36. It should be understood, however, that more than one electronic control unit 42 may be used in the present invention. For example, one electronic control unit may be used to monitor pressure in the vehicle tires 28 of the steer and drive axles 14, 16, 18 of vehicle 12 and to control air pressure within those tires while a second electronic control unit may be used to monitor pressure in the vehicle tires 28 of the trailer axles 20, 22 and to control air pressure within those tires. Where multiple units are used, a hardwire, radio-frequency, or power lead communication connection is preferably made between the units to allow sharing of information between the units and integrated control of input/output devices such as operator control device 48.

Load sensors 44 provide an indication as to the load on vehicle 12 (and, consequently, the tires 28 of vehicle 12) or the load on some portion of vehicle 12 (and, consequently, select tires 28 of vehicle 12). Load sensors 44 are conventional in the art and load sensing may be provided in a variety of known ways, including through analysis of pneumatic pressure in the suspension of vehicle 12, analysis of powertrain parameters, the use of displacement transducers, or the implementation of load beams and strain gauges. Each load sensor 44 may provide one or more load indicative signals to electronic control unit 42 indicative of the load bearing on vehicle 12 or a portion thereof.

Electronic control unit 42 may adjust the pressure within tires 28 of vehicle 12 in response to the load indicative signals in a variety of ways. For example,the unit may cause an increase or decrease, respectively, in the pressure within one or more tires 28 responsive to a corresponding increase or decrease in vehicle load based on a variety of linear or non-linear functions. In a preferred embodiment of the present invention, one or more tire deflection tables are stored in a memory, such as memory 114, and are accessed by electronic control unit 42 responsive to the load indicative signals. Referring to Figure 4, a sample tire deflection table 116 is shown. Tire deflection relates to the load carried by the tire 28 and the size of the "footprint" of the tire 28, and is dependent on tire pressure. As illustrated in Figure 4, in order to maintain a constant deflection level in a vehicle tire 28, the pressure in the tire 28 must be increased as the load on the tire 28 increases. It should be understood that the deflection table 116 set forth in Figure 4 is meant to be exemplary only as opposed to illustrating any known or established functional relationship. The functional relationship between pressure, load, and deflection level will vary for different tires depending on a variety of factors including the size of the tire and its manufacturer. Preferably, the deflection tables for each tire 28 of vehicle 12 may be loaded into memory 114 through an input device such as a personal computer so that the appropriate deflection tables will be available for each tire 28 of the vehicle 12--particularly when a tire 28 on vehicle 12 is changed. Alternatively, memory 114 may be programmed with deflection tables for a plurality of known makes and models of vehicle tires and the appropriate table can be selected using an input device such as a personal computer.

Speed sensor 46 is provided to measure the speed of vehicle 12 in order to further control deflection levels for tires 28. High deflection levels can create safety concerns and reduce tire life if maintained while the vehicle 12 is operating at relatively high speeds. Speed sensor 46 is conventional in the art and provides a speed indicative signal to electronic control unit-42.

Electronic control unit 42 may be configured through a plurality of programming instructions to provide a means for comparing the speed of vehicle 12 as indicated by the speed indicative signal to a predetermined maximum speed corresponding to a deflection level for tires 28. The predetermined maximum speed may be stored in a memory, such as memory 114. Memory 114 may include a plurality of predetermined maximum speeds--each corresponding to a particular deflection level for tires 28. For example, a maximum speed of 70 mph (highway conditions) may correspond to a 10% deflection level for tires 28, a maximum speed of 35 mph (off-highway conditions) may correspond to a 20% deflection level for tires 28, and a maximum speed of 10 mph (extreme conditions) may correspond to a 30% deflection level for tires 28. In the event unit 42 determines that the maximum speed level has been exceeded for a preset deflection level, unit 42 may generate appropriate control signals to control valves 82, 84, 86, 88, 90 and provide positive pressurized air to tires 28 in order to reduce the deflection level of tires 28.

Operator control device 48 may be provided to allow the operator of vehicle 12 to exert at least some level of control over system 10. Device 48 is conventional in the art and may include a plurality of input/output devices such as a keypad, touch screen, switches or similar input devices and a display screen, sound generator, lights or similar output devices. Thus, device 48 includes means for an operator of vehicle 12 to transmit control signals to electronic control unit 42 to adjust pressure levels within the tires 28 of vehicle 12. The control signals may, for example, correspond to deflection levels for tires 28 of vehicle 12. As a result, the operator is able to adjust the deflection level of the tires 28 to correspond to the terrain over which vehicle 12 is traveling. Such control is desirable to provide improved floatation and traction on certain terrain. It should be understood, however, that where the control signal corresponds to a deflection level for the tire 28, the electronic control unit 42 may be programmed to disregard the control signal depending upon the speed of vehicle 12 as described in greater detail hereinabove.

The operation of system 10 and a method for managing tire pressure in a vehicle 12 in accordance with a first embodiment of the present invention will now be described. The inventive method may include the step of generating a radio-frequency parameter signal wherein the parameter signal is indicative of a value of a parameter associated with a tire 28 of vehicle 12. In particular, pressure sensing circuit 38 may measure a parameter associated with tire 28 and transmit a radio-frequency signal indicative of the measured value. As set forth hereinabove, the measured parameter may comprise the pressure in tire 28. Alternatively, the measured parameter may comprise the temperature in tire 28 or another parameter indicative of tire pressure. Also as set forth hereinabove, the parameter signal preferably includes a tire identification code to identity the tire 28 from which the parameter measurement was taken.

The inventive method may also include the step of controlling pressure within the tire 28 responsive to the parameter signal. This step may include the substep of receiving the parameter signal. In particular, the parameter signal is received by a receiver 40 that then generates an electronic signal and provides it to electronic control unit 42 or generates another radio-frequency signal and provides it to another receiver 40 for eventual receipt by electronic control unit 42. The step of controlling pressure within tire 28 responsive to the parameter signal may also include the substeps of: controlling a pressure control valve, such as valve 82, disposed between air source 32 and tire 28 responsive to the parameter signal; Controlling another pressure control valve, such as valve 84, disposed between vacuum source 34 and tire 28 responsive to the parameter signal; and controlling one or more axle distribution or tire distribution valves, such as valves 86, 88, 90, disposed between the pressure control valves 82, 84 and the vehicle tires 28 responsive to the parameter signal. In particular, if the parameter signal indicates that the pressure in one of the vehicle tires 28 is below a predetermined target pressure, unit 42 may energize the solenoid coils in valves 82, 84, and the appropriate axle distribution valve 86, 88, 90 in order to open pressure control valve 82 and the corresponding axle distribution valve 86, 88, 90 and close pressure control valve 84, thereby providing positive pressure to the affected tire 28. If the parameter signal indicates that the pressure in the vehicle tires 28 is above a predetermined target pressure, unit 42 may energize the solenoid coil of the corresponding axle distribution valve 86, 88 90 to open the valve 86, 88, 90 (pressure control valves 82, 84 will already be closed and opened, respectively, by spring bias). This action produces a negative pressure differential at the inlet port 30a to the corresponding wheel valve 30 and causes the wheel valve 30 to couple its outlet port 30b to its exhaust port 30c to lower tire pressure. Target tire pressures may be set to a predetermined value or to a programmed value using an input device such as a personal computer or operator control device 48.

A tire pressure management system in accordance with a first embodiment of the present invention represents a significant improvement as compared to conventional tire pressure management systems. The inventive system allows direct sensing of individual tire pressure through the use of wireless pressure sensing technologies thereby simplifying pressure monitoring and control. Further, the measured pressures are unaffected by variables inherent in the air control circuit such as air line diameter and length, and reservoir volumes. As a result, the inventive system provides more accurate monitoring and control of tire pressure.

A method in accordance with a first embodiment of the present invention may also include one or more additional steps to implement various functions of the inventive tire pressure management system. For example, to facilitate tire pressure monitoring, the inventive method may include the steps of comparing the parameter value indicated by the parameter signal to a target parameter value and generating a warning signal if the parameter value differs from the target parameter value by a predetermined amount. The warning signal may be delivered to operator control device 48 or another device that provides a visual or audible warning to the operator of vehicle 12.

In order to facilitate tire pressure control, the inventive method may include the step of receiving a control signal from an operator of vehicle 12. As set forth hereinabove, the operator of vehicle 12 may exert at least some level of control over system 10 through operator control device 48. Through device 48, the operator can control unit 42 to adjust pressure levels within individual tires 28 of vehicle 12. The operator may, for example, generate a control signal corresponding to a deflection level for the vehicle tires to adjust the deflection level relative to the terrain over which the vehicle is traveling.

The operation of system 10 will now be further described along with a method for managing tire pressure in vehicle 12 in accordance with a second embodiment of the present invention. A method in accordance with the second embodiment may include the step of generating a load indicative signal. As set forth hereinabove, one or more load sensors 44 may be used to generate load indicative signals that are indicative of a load bearing on at least a portion of vehicle 12. The inventive method may further include the step of controlling pressure within a tire 28 of vehicle 12 responsive to the load indicative signal. This step may include the substeps of controlling a pressure control valve, such as valve 82, disposed between air source 32 and tire 28 responsive to the load indicative signal; controlling another pressure control valve, such as valve 84, disposed between vacuum source 34 and tire 28 responsive to the load indicative signal; and controlling one or more axle distribution or tire distribution valves, such as valves 86, 88, 90, disposed between the pressure control valves 82, 84 and the vehicle tires 28 responsive to the load indicative signals. In particular, if a load indicative signal indicates that the load on one of the vehicle tires 28 has increased, unit 42 may energize the solenoid coils in valves 82, 84, and the appropriate axle distribution valve 86, 88, 90 in order to open pressure control valve 82 and the corresponding axle distribution valve 86, 88, 90 and close pressure control valve 84, thereby providing positive pressure to the affected tire 28. If a load indicative signal indicates that the load on one of the vehicle tires 28 has decreased, unit may energize the solenoid coil of the corresponding axle distribution valve 86, 88, 90 to open the valve 86, 88, 90 (pressure control valves 82, 84 will already be closed and opened, respectively, by spring bias). This action produces a negative pressure differential at the inlet port 30a to the corresponding wheel valve 30 and causes the wheel valve 30 to couple its outlet port 30b to its exhaust port 30c to lower tire pressure.

As set forth hereinabove, system 10 may adjust tire pressure responsive to variations in load in a variety of ways. In a preferred embodiment, a plurality of deflection tables are stored in memory 114 that correlate tire pressure and load with tire deflection levels. Accordingly, in a preferred embodiment, the step of controlling pressure within a tire 28 of vehicle 12 responsive to the load indicative signal may also include the substep of accessing a deflection table, such as table 116, stored in a memory 114 responsive to the load indicative signal. In particular, and with reference to Figure 4, unit may generate one or more control signals to adjust the pressure in one or more vehicle tires 28 in order to maintain a preset deflection level despite variations in vehicle load.

A tire pressure management system in accordance with a second embodiment of the present invention also represents a significant improvement as compared to conventional tire pressure management systems. The inventive system enables optimization of vehicle tire pressure to account for load variations in the vehicle resulting from an increase or decrease in vehicle load as a whole or uneven distribution of load within the vehicle. As a result, the inventive system improves tire performance and tire life.

A method in accordance with the second embodiment of the present invention may also include one or more additional steps to implement various functions of the inventive tire pressure management system 10. For example, the inventive method may include several steps designed to limit tire pressure adjustment due to vehicle speed. As set forth hereinabove, it is undesirable to maintain certain tire deflection levels above certain speeds for safety reasons and because of tire wear. Accordingly, the inventive method may include the steps of generating a speed indicative signal indicative of a speed of vehicle 12 and comparing the speed of vehicle 12 as indicated by the speed indicative signal to a predetermined maximum speed corresponding to a preset deflection level. The speed of vehicle 12 may be determined using a conventional speed sensor 46. The comparison of the measured speed and the predetermined maximum speeds may be performed by electronic control unit 42. If the speed of the vehicle 12 is greater than the predetermined maximum speed for a preset deflection level, the electronic control unit 42 may generate control signals to increase the tire pressure within the tires 28--disregarding any operator input control signal.

The inventive method may also include several steps discussed hereinabove for use in tire pressure monitoring and control. In particular, the inventive method may include the step of generating a parameter signal indicative of a value of a parameter associated with a tire 28 of vehicle 12. This step may be useful in determining whether a pressure adjustment is needed responsive to a variation in load. In particular, prior to performing a pressure adjustment responsive to a load variation, the pressure in each tire 28 may be determined through respective parameter signals to determine if such an adjustment is necessary.

Finally, in order to facilitate tire pressure control, the inventive method may include the step of setting a deflection level for a tire 28 of vehicle 12. As set forth hereinabove, the operator of vehicle 12 may exert at least some level of control over system through operator control device 48. Through device 48, operator can control unit 42 to adjust pressure levels within individual tires 28 of vehicle 12. In particular, the operator can generate a control signal corresponding to a deflection level for the vehicle tires 28 to adjust the deflection level relative to the terrain over which vehicle 12 is traveling.

While the invention has been particularly shown and described with reference to the preferred embodiments thereof, it is well understood by those skilled in the art that various changes and modifications can be made in the invention without departing from the scope of the invention.

## Claims

1. A tire pressure management system for a vehicle, comprising:
an air source;
a first pressure control valve disposed between said air source and a tire of said vehicle;
a pressure sensing circuit in fluid communication with the interior of said tire, said pressure sensing circuit including a transmitter that transmits a radio-frequency parameter signal indicative of a value of a parameter associated with said tire; and,
an electronic control unit configured to control said first pressure control valve responsive to said parameter signal.

2. The tire pressure management system of claim 1, further comprising a second pressure control valve disposed between said tire and a vacuum source, said electronic control unit configured to control said second pressure control valve responsive to said parameter signal.

3. The tire pressure management system of claim 1, further comprising a distribution valve disposed between said first pressure control valve and said tire, said electronic control unit configured to control said distribution valve responsive to said parameter signal.

4. The tire pressure management system of claim 1, further comprising means for an operator of said vehicle to transmit a control signal to said electronic control unit.

5. The tire pressure management system of claim 4 wherein said control signal corresponds to a deflection level for said tire.

6. The tire pressure management system of claim 1 wherein the radio-frequency signal includes a tire identification code.

7. The tire pressure management system of claim 1 wherein said parameter comprises a pressure in said tire.

8. The tire pressure management system of claim 1 wherein said electronic control unit includes:
means for comparing a parameter value indicated by said parameter signal to a target parameter value; and
means for generating a warning signal if said parameter value differs from said target parameter value by a predetermined amount.

9. A method of managing tire pressure in a vehicle, comprising the steps of:
generating a radio-frequency parameter signal, said parameter signal indicative of a value of a parameter associated with a tire of said vehicle; and,
controlling pressure within said tire responsive to said parameter signal.

10. The method of claim 9 wherein said controlling step includes the substeps of:
receiving said parameter signal; and,
controlling a first pressure control valve disposed between an air source and said tire responsive to said parameter signal.

11. The method of claim 10 wherein said controlling step further includes the step of controlling a second pressure control valve disposed between a vacuum source and said tire responsive to said parameter signal.

12. The method of claim 10 wherein said controlling step further includes the step of controlling a distribution valve disposed between said first pressure control valve and said tire responsive to said parameter signal.

13. The method of claim 9 wherein said parameter signal includes a tire identification code.

14. The method of claim 9 wherein said parameter comprises a pressure in said tire.

15. The method of claim 9, further comprising the step of receiving a control signal from an operator of said vehicle.

16. The method of claim 15 wherein said control signal corresponds to a deflection amount of said tire.

17. The method of claim 9, further comprising the steps of:
comparing said parameter value to a target parameter value;-and,
generating a warning signal if said parameter value differs from said target parameter value by a predetermined amount.

18. A tire pressure management system, for a vehicle, comprising:
an air source,
a pressure control valve disposed between said air source and a tire of said vehicle;
a load sensor that generates a load indicative signal indicative of a load bearing on at least a portion of said vehicle; and,
an electronic control unit configured to control said pressure control valve responsive to said load indicative signal.

19. The tire pressure management system of claim 18, further comprising a second pressure control valve disposed between said tire and a vacuum source, said electronic control unit configured to control said second pressure control valve responsive to said load indicative signal.

20. The tire pressure management system of claim 18, further comprising a distribution valve disposed between said first pressure control valve and said tire, said electronic control unit configured to control said distribution valve responsive to said load indicative signal.

21. The tire pressure management system of claim 18, further comprising a pressure sensing circuit including a transmitter that transmits a parameter signal indicative of a measured parameter associated with said tire.

22. The tire pressure management system of claim 21 wherein said parameter signal comprises a radio-frequency signal.

23. The tire pressure management system of claim 21 wherein said parameter comprises a pressure in said tire.

24. The tire pressure management system of claim 18, further comprising a deflection table stored in a memory, said deflection table accessed by said electronic control unit responsive to said load indicative signal.

25. The tire pressure management system of claim 18, further comprising means for an operator of said vehicle to transmit a control signal to said electronic control unit to set a deflection level of said tire.

26. The tire pressure management system of claim 18, further comprising a speed sensor that provides a speed indicative signal to said electronic control unit, said speed indicative signal indicative of a speed of said vehicle.

27. The tire pressure management system of claim 26 wherein said electronic control unit includes means for comparing said speed of said vehicle as indicated by said speed indicative signal to a predetermined speed corresponding to a preset deflection level.

28. A method for managing tire pressure in a vehicle, comprising the steps of:
generating a load indicative signal, said load indicative signal indicative of a load bearing on at least a portion of said vehicle; and,
controlling pressure within a tire of said vehicle responsive to said load indicative signal.

29. The method of claim 28 wherein said controlling step includes the substep of controlling a first pressure control valve disposed between an air source and said tire responsive to said load indicative signal.

30. The method of claim 29, wherein said controlling step further includes the substep of controlling a second pressure control valve disposed between said tire and a vacuum source responsive to said load indicative signal.

31. The method of claim 29, wherein said controlling step further includes the substep of controlling a distribution valve disposed between said first pressure control valve and said tire responsive to said load indicative signal.

32. The method of claim 28 wherein said controlling step includes the substep of accessing a deflection table stored in a memory responsive to said load indicative signal.

33. The method of claim 28 wherein said controlling step includes the substep of generating a speed indicative signal indicative of a speed of said vehicle.

34. The method of claim 33, wherein said controlling step includes the substep of comparing said speed of said vehicle as indicated by said speed indicative signal to a predetermined maximum speed corresponding to a preset deflection level.

35. The method of claim 28, further comprising the step of generating a parameter signal, said parameter signal indicative of a value of a parameter associated with a tire of said vehicle.

36. The method of claim 35 wherein said parameter signal comprises a radio-frequency signal.

37. The method of claim 35 wherein said parameter comprises a pressure in said tire.

38. The method of claim 28, further comprising the step of setting a deflection level for said tire.
